# EUROPEAN PATENT SPECIFICATION

(11) **EP 2 860 620 B1**
(45) Date of publication and mention of the grant of the patent: **08.08.2018**
(21) Application number: 14185309.3
(22) Date of filing: 18.09.2014
(51) Int. Cl.: G06F 3/0482, G06F 3/0485, H04M 1/725, G06Q 10/10

(54) **Mobile terminal and controlling method thereof**
Mobiles Endgerät und Steuerungsverfahren dafür
Terminal mobile et son procédé de contrôle

(30) Priority: 11.10.2013 KR 20130121257
(43) Date of publication of application: 15.04.2015
(73) Proprietor: LG Electronics Inc., Seoul, 07336 (KR)
(72) Inventor: Kim, Koonsoon, 137-893 Seoul (KR)
(74) Representative: Ter Meer Steinmeister & Partner

(56) References cited:
- EP-A1- 2 270 727
- EP-A1- 2 312 816
- EP-A2- 2 116 927
- US-A1- 2008 171 535
- US-A1- 2009 209 286
- US-A1- 2010 214 237
- US-A1- 2010 217 809

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a message with a specific counterpart to be checked on a message list.

### Discussion of the Related Art

Document EP 2 116 927 A2 discloses a mobile terminal comprising a wireless communication unit, a memory configured to store massages, a display unit configured to display a message list including at least one counterpart and at least one corresponding message, and a controller to change the message of the selected counterpart based on a first scroll input on the display unit, which is a touch screen display.

Similar mobile terminals are disclosed by EP 2 270 727 A1, US 2010/214237 A1 and US 2010/217809 A1.

A mobile terminal is a device which may be configured to perform various functions. Examples of such functions include data and voice communications, capturing images and video via a camera, recording audio, playing music files and outputting music via a speaker system, and displaying images and video on a display.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals, Such efforts include software and hardware improvements, as well as changes and improvements in the structural components which form the mobile terminal.

If a mobile terminal receives a message from a specific counterpart, it is necessary to run an application for checking the received message in order to check the received message. For instance, if a text message is received, a text message application should be run. If a messenger message is received, a messenger application should be run.

Once each application is run, a controller can control a message list to be displayed in order to basically display a transmitted/received message history per counterpart. According to a related art, in order to check a message transceived with a specific counterpart, if a specific counterpart is selected from a message list, the message list stops being outputted and a chat window with the specific counterpart is outputted. In particular, the related art has a problem that the message list should stop being outputted in order to check the message with the specific counterpart.

Therefore, the present invention intends to provide a mobile terminal, by which a message transceived with a specific counterpart can be checked on a message list.

### SUMMARY OF THE INVENTION

Accordingly, embodiments of the present invention are directed to a mobile terminal and controlling method thereof that substantially obviate one or more problems due to limitations and disadvantages of the related art.

An object of the present invention is to provide a mobile terminal and controlling method thereof, by which user's convenience can be enhanced.

In particular, one object of the present invention is to provide a mobile terminal and controlling method thereof, by which a message with a specific counterpart can be checked on a message list.

Another object of the present invention is to provide a mobile terminal and controlling method thereof, by which a message by a different medium can be displayed on a message list related to a specific medium.

Additional advantages, objects, and features of the invention will be set forth in the disclosure herein as well as the accompanying drawings. Such aspects may also be appreciated by those skilled in the art based on the disclosure herein.

The objects are solved by the features of the independent claims.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1 is a block diagram of a mobile terminal according to one embodiment of the present invention;
FIG. 2 is a front perspective diagram of a mobile terminal according to one embodiment of the present invention;
FIG. 3 is a rear perspective diagram of a mobile terminal according to one embodiment of the present invention;
FIG. 4 is a flowchart for an operation of a mobile terminal according to one embodiment of the present invention;
FIG. 5 is a diagram for one example to describe that a message list is displayed through a display unit;
FIG. 6 is a diagram for one example that a counterpart selected by a user input is displayed in a manner of being visually identifiable;
FIG. 7A and FIG. 7B are diagrams to describe an example of adjusting a size of a display region of a selected counterpart;
FIG. 8A and FIG. 8B are diagrams to describe one example of activating a different function in response to a pinch-out/in input depending on whether a specific counterpart is selected;
FIG. 9 is a diagram for one example of displaying a popup menu;
FIG. 10A and FIG. 10B are diagrams for one example of applying a scroll function only to a display region corresponding to a selected counterpart;
FIG. 11A and FIG. 11B are diagrams to describe one example of changing a message change unit in accordance with a scroll speed;
FIG. 12A and FIG. 12B are diagrams to describe one example of adjusting a message change reference in accordance with a scroll speed;
FIG. 13A is a diagram for one example of an operation in case of applying a scroll input in a vertical direction;
FIG. 13B is a diagram for one example of an operation in case of applying a scroll input in a horizontal direction;
FIG. 14 is a diagram to describe one example of displaying a search window for searching messages transmitted to or received from a selected counterpart for a message containing a specific keyword;
FIGs. 15A to 15C are diagrams to describe examples of displaying a message by a different medium on a message list for a specific medium; and
FIGs. 16A to 16C are diagrams for examples of determining a medium to display on a message list in consideration of a moving direction of a pointer.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of mobile terminals. Examples of such terminals include mobile phones, user equipments, smart phones, digital broadcast receivers, personal digital assistants, laptop computers, portable multimedia players (PMP), navigators and the like.

Yet, it is apparent to those skilled in the art that a configuration according to an embodiment disclosed in this specification is applicable to such a fixed terminal as a digital TV, a desktop computer and the like as well as a mobile terminal.

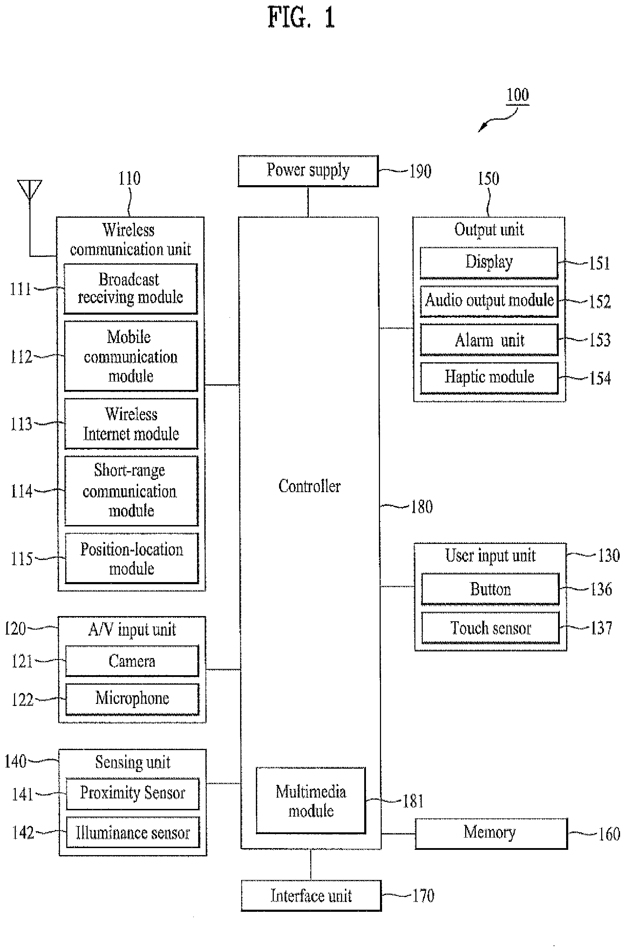

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided to the mobile terminal 100 in pursuit of simultaneous receptions of at least two broadcast channels or broadcast channel switching facilitation.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), Convergence of Broadcasting and Mobile Service(DVB-CBMS), Open Mobile Alliance-BroadCAST(OMA-BCAST), China Multimedia Mobile Broadcasting (CMMB), Mobile Broadcasting Business Management System(MBBMS), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM (Global System for Mobile communications), CDMA (Code Division Multiple Access), WCDMA (Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module. According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a button 136 provided to front/rear/lateral side of the mobile terminal 100 and a touch sensor (constant pressure/electrostatic) 137 and may further include a key pad, a dome switch, a jog wheel, a jog switch and the like [not shown in the drawing].

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. By nonlimiting example, such sensing unit 140 include, gyro sensor, accelerate sensor, geomagnetic sensor.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and the touch sensor 137 configures a mutual layer structure (hereinafter called 'touch screen'), it is able to use the display 151 as an input device as well as an output device. In this case, the touch sensor can be configured as a touch film, a touch sheet, a touchpad or the like.

The touch sensor 137 can be configured to convert a pressure applied to a specific portion of the display 151 or a variation of a capacitance generated from a specific portion of the display 151 to an electric input signal. Moreover, it is able to configure the touch sensor 137 to detect a pressure of a touch as well as a touched position or size.

If a touch input is made to the touch sensor 137, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

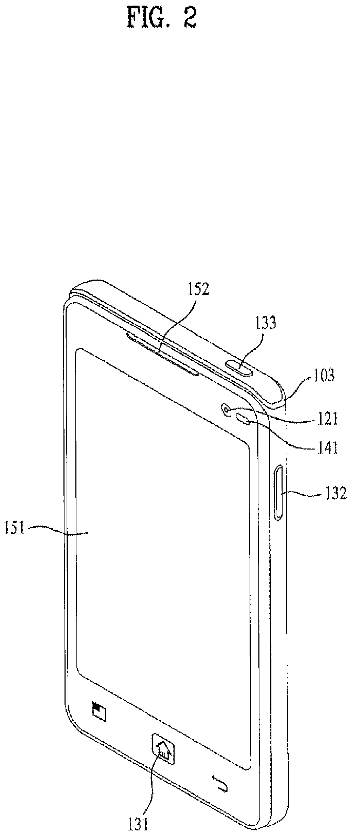

Referring to FIG. 2, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

For clarity and convenience of the following description, as a pointer becomes proximate to a touchscreen without coming into contact with the touchscreen, if the pointer is perceived as situated over the touchscreen, such an action shall be named 'proximity touch'. If a pointer actually comes into contact with a touchscreen, such an action shall be named 'contact touch'. A proximity-touched position over the touchscreen with the pointer may mean a position at which the pointer vertically opposes the touchscreen when the touchscreen is proximity-touched with the pointer.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

A battery may include a built-in rechargeable battery and may be detachably attached to the terminal body for a charging and the like. A connecting port may be configured as one example of the interface 170 via which an external charger for supplying a power of a battery charging is electrically connected.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (101, 102, 103) configuring an exterior thereof. In the present embodiment, the case can be divided into a front case 101 and a rear case 102. Various electric/electronic parts are loaded in a space provided between the front and rear cases 101 and 102.

Occasionally, electronic components can be mounted on a surface of the rear case 102. The electronic part mounted on the surface of the rear case 102 may include such a detachable part as a battery, a USIM card, a memory card and the like. In doing so, the rear case 102 may further include a backside cover 103 configured to cover the surface of the rear case 102. In particular, the backside cover 103 has a detachable configuration for user's convenience. If the backside cover 103 is detached from the rear case 102, the surface of the rear case 102 is exposed.

Referring to FIG. 2, if the backside cover 103 is attached to the rear case 102, a lateral side of the rear case 102 may be exposed in part. If a size of the backside cover 103 is decreased, a rear side of the rear case 102 may be exposed in part. If the backside cover 103 covers the whole rear side of the rear case 102, it may include an opening 103' configured to expose a camera 121' or an audio output unit 152' externally.

The cases 101, 102 and 103 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the case 101 or 102.

The display 151 occupies most of a main face of the front case 101. The audio output unit 152 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152 and the like can be inputted to the second manipulating unit 132, a command for a switching to a touch recognizing mode of the display 151 and the like can be inputted to the second manipulating unit 133.

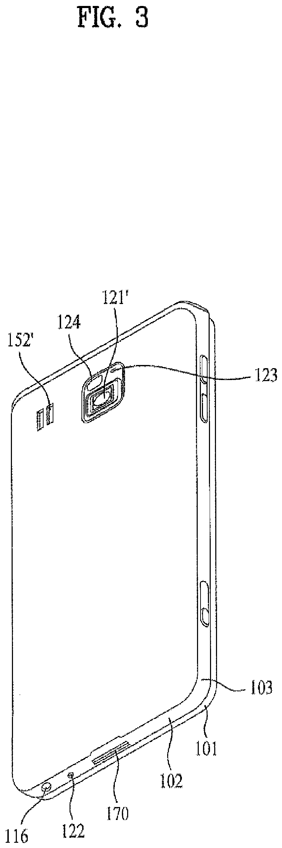

FIG. 3 is a perspective diagram of a backside of the terminal shown in FIG. 2.

Referring to FIG. 3, a camera 121' can be additionally provided to a backside of the terminal body, and more particularly, to the rear case 102. The camera 121 has a photographing direction that is substantially opposite to that of the former camera 121 shown in FIG. 2 and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2 and may be used for implementation of a speakerphone mode in talking over the terminal.

A broadcast signal receiving antenna 116 can be additionally provided to the lateral side of the terminal body as well as an antenna for communication or the like. The antenna 116 constructing a portion of the broadcast receiving module 111 shown in FIG. 1 can be retractably provided to the terminal body.

For clarity and convenience of the following description, assume that the mobile terminal 100 mentioned in the following description includes at least one of the components shown in FIG. 1. In particular, assume that a mobile terminal according to the present invention includes the wireless communication unit 110, the display unit 151, the memory 160 and the controller 180 among the components shown in FIG. 1.

For clarity and convenience of the following description, a person intending to use the mobile terminal 100 according to the present invention shall be called a user and a terminal configured to perform a communication (e.g., a message transmission and reception, a phone call, etc.) with the mobile terminal 100 according to the present invention or a person who uses this terminal shall be called a counterpart.

And, if the display module or unit 151 of the mobile terminal 100 according to the present invention includes a touchscreen, implementation of the following embodiments may be further facilitated. Therefore, the following description is made on the assumption that the display module or unit 151 includes the touchscreen. Yet, it is not mandatory for the display unit 151 to include the touchscreen. If the display unit does not include the touchscreen, the mobile terminal 100 according to the present invention may further include an input means for receiving a user input.

Moreover, a message mentioned in the description of the present invention is assumed as transmitted or received through at least one of various communication media (e.g., a text messaging service (SMS, LMS, MMS, etc.), an instant messaging service, an email service, a social network service (SNS), etc.) for performing communications with other terminals.

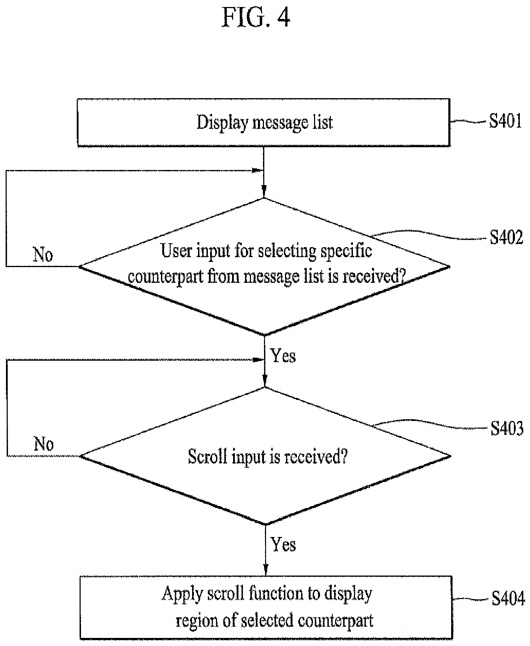

In the following description, the mobile terminal 100 according to the present invention is explained in detail with reference to FIG. 4.

FIG. 4 is a flowchart for an operation of a mobile terminal according to one embodiment of the present invention.

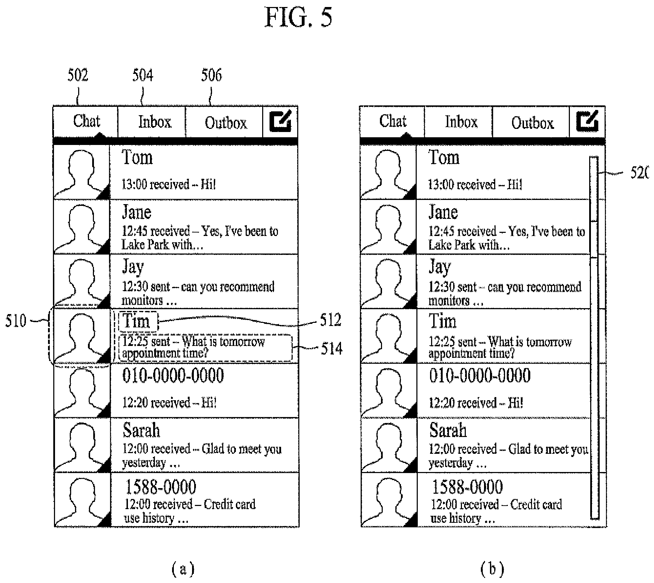

Referring to FIG. 4, if a user input for displaying a message list is received, the controller 180 can control the display unit 151 to display the message list [S401]. In the following description, one example of displaying the message list through the display unit 151 is explained in detail with reference to FIG. 5.

FIG. 5 is a diagram for one example to describe that a message list is displayed through the display unit 151. In the example shown in FIG. 5, a text message list is displayed.

Referring to FIG. 5, the controller 180 can control the message list to include at least one or more display regions in accordance with the number of counterparts having transmitted or received messages. On the display region, an identification information 512 on a prescribed counterpart and a message 514 transmitted to or received from the corresponding counterpart can be displayed. In this case, the identification information of the counterpart can include at least one of a name of the counterpart (e.g., a name of the counterpart registered at a phonebook, etc.), a phone number of the counterpart, a nickname of the counterpart (e.g., a nick name registered at a messenger server or an SNS server by the counterpart to use an instant messaging service or an SNS, etc.), and an email address of the counterpart. In the example shown in FIG. 5 (a) and FIG. 5 (b), a name or phone number of the counterpart is used as the identification information 512 of the counterpart.

Moreover, the message 514 for the counterpart, which is displayed on the corresponding display region, may include a message transmitted to or received from the counterpart by a user most recently. In this case, as the message is long, if a whole content of the message is not displayable on the corresponding display region, a portion of the message may be displayed on the corresponding display region.

At least one portion of the display region may be assigned as an image region 510 for displaying a profile image of the counterpart. On the image region 510, a photo of the counterpart registered at the phonebook or a photo registered at a server by the counterpart (e.g., a photo registered at a messenger server by the counterpart to use an instant messaging service) can be displayed.

In displaying the message list, the controller 180 can simultaneously display both a message transmitting counterpart list and a message receiving counterpart list without separating message senders and message recipients from each other. Alternatively, the controller 180 can control a message sender list and a message recipient list to be displayed in a manner of being separated from each other.

For instance, in the example shown in FIG. 5 (a) and FIG. 5 (b), a chat tab 502 may be provided to display both of the message sender list and the message recipient list simultaneously. The inbox tab 504 may be provided to display the message sender list only. And, the outbox tab 506 may be provided to display the message recipient list only.

Moreover, the controller 180 can sort counterparts by most recently communicating time (i.e., a time of sending or receiving a message most recently), name, message transceived count, or the like.

As there are too many counterparts having sent or receives messages, if it is unable to display all users at the same time, the controller 180 can move the message list through a scroll input. Once the message list is moved, new information can be displayed on an opposite side as much as a part disappearing from the moved screen. For instance, if a user input for scrolling the message list is inputted, like the example shown in FIG. 5 (b), the controller 180 can control an information on a new counterpart to be displayed by moving the message list in one direction. While the message list is scrolled, like the example shown in FIG. 5 (b), a scroll bar 520 for displaying a currently displayed location information to be displayed on the display unit 151. In particular, the scroll bar 520 can be set to disappear automatically if a prescribed time elapses after the end of the scroll of the message list. In this case, the user input (hereinafter named a scroll input) for the scroll can include one of input examples of various types including a drag input (i.e., an action of moving a pointer by keeping a touchscreen touched with the pointer), a flicking input (i.e., an action of flicking a pointer currently touching a touchscreen in one direction), a manipulation of a physical key (e.g., a '+/-' key for volume adjustment) assigned for a scroll, and the like.

Referring now to FIG. 4, according to the present invention, while the message list is displayed, a user input for selecting a specific counterpart can be applied by a user [S402]. In this case, the user input for selecting the specific counterpart can include one of a touch to a display region (or an image region) corresponding to the specific counterpart, a long touch to the display region (i.e., an action of maintaining a touch to a display region over a prescribed time), and the like. For another instance, only if the touched to the display region corresponding to the specific counterpart is maintained, the controller 180 can regard it as selecting the specific counterpart.

Once the specific counterpart is selected by the user input, the controller 180 can control the selected counterpart to be displayed in a manner of being visually identifiable.

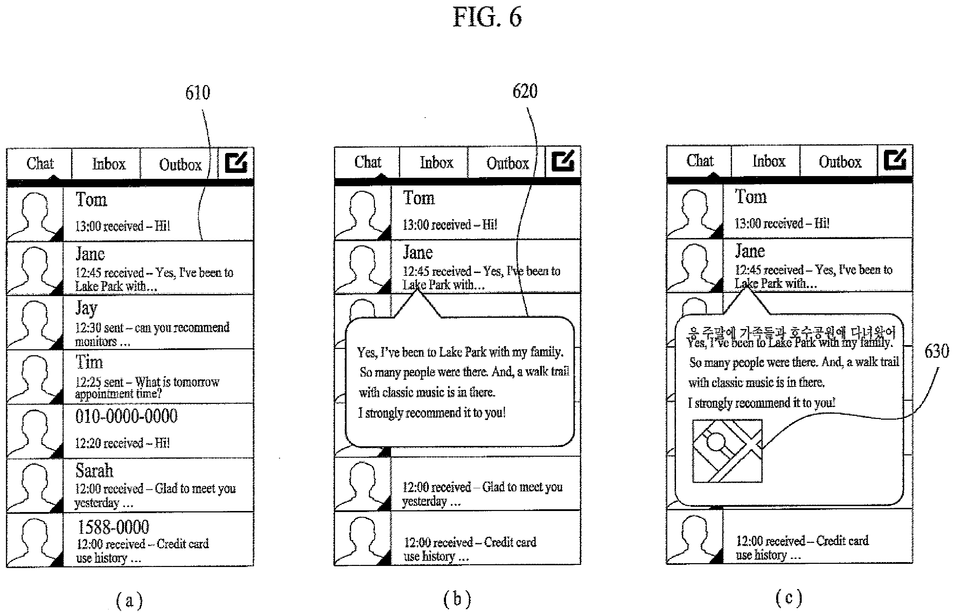

FIG. 6 is a diagram for one example that a counterpart selected by a user input is displayed in a manner of being visually identifiable.

Referring to FIG. 6, if a specific counterpart is selected by a user input, like the example shown in FIG. 6 (a), the controller 180 controls a thick outline 610 to be displayed in a manner of enclosing a display region corresponding to the selected counterpart, whereby the selected counterpart can be displayed in a manner of being visually identifiable.

Since a message is long, if a whole content of the message is unable to be displayed on the display region of the selected counterpart, like the example shown in FIG. 6 (b), the controller 180 can control a popup window 620, on which the whole content of the message is displayed, to be displayed. If the message displayed through the display region of the selected counterpart contains an image, like the example shown in FIG. 6 (c), the controller 180 can control an image 630 to be displayed on the popup window 620. In doing so, if a size of the image 630 is greater than a preset limit, the controller 180 can control the image 630 to be displayed on the popup window 620 in a manner of being resized into a preset size.

The popup window 620 shown in FIG. 6 (b) or FIG. 6 (b) can be displayed only if it is unable to output the whole content of the message to the display region of the selected counterpart. In particular, if it is able to output the whole content of the message to the display region of the selected counterpart, it is able to skip the display of the popup window 620.

Unlike the example shown in FIG. 6, the controller 180 changes a color of a display region of a selected counterpart or adjusts a font, thickness, size and the like of information (e.g., an identification information of a counterpart, a message sent to or received from a counterpart, etc.) displayed through the display region of the selected counterpart, thereby enabling a selected counterpart to be displayed in a manner of being visually identifiable. Moreover, by enlarging a size of a display region of a selected counterpart, it is a manner of course that the selected counterpart can be displayed in a manner of being visually identifiable.

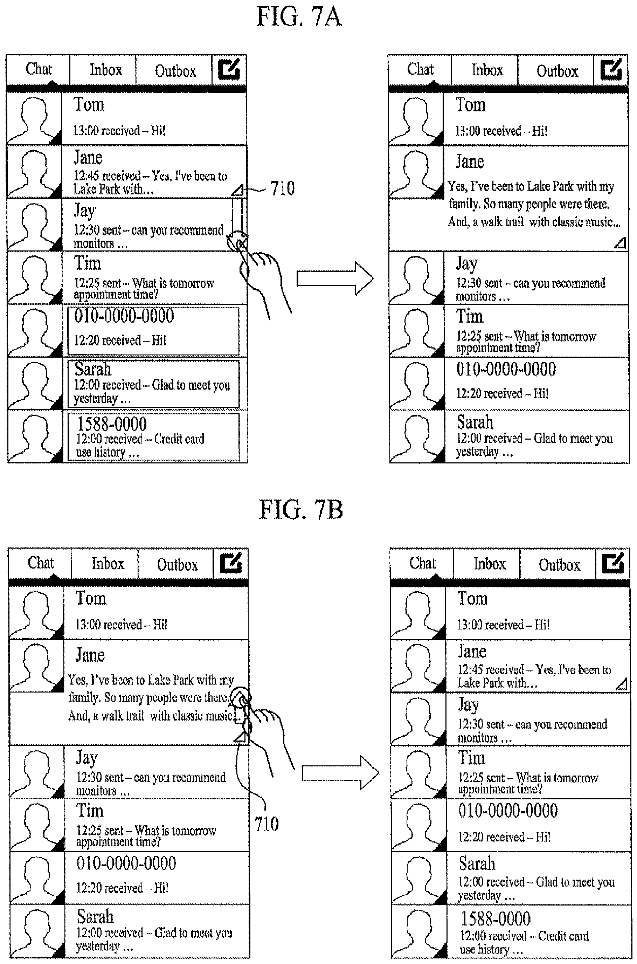

While a specific counterpart is selected from the message list, if a user input for adjusting a size of the display region of the selected counterpart is received, the controller 180 can adjust a size of the display region of the selected counterpart in response to the user input. This is described in detail with reference to FIG. 7A and FIG. 7B as follows.

FIG. 7A and FIG. 7B are diagrams to describe an example of adjusting a size of a display region of a selected counterpart.

Referring to FIG. 7A and FIG. 7B, if a specific counterpart is selected from a message list, the controller 180 can control an indicator 710, which is configured to adjust a size of a display region, to be displayed within the display region of the selected counterpart. In particular, a user is able to adjust the size of the display region by dragging the indicator 710. For instance, in case that the indicator 710 is dragged outside the display region of the selected counterpart, like the example shown in FIG. 7A, the controller 180 can control the size of the display region of the selected counterpart to be increased. On the contrary, in case that the indicator 710 is dragged inside the display region of the selected counterpart, like the example shown in FIG. 7B, the controller 180 can control the size of the display region of the selected counterpart to be decreased. If a scroll input is received, the controller 180 controls the indicator 710 to stop being displayed within the display region of the selected counterpart. If the user's scroll input is ended, the controller 180 can control the indicator 710 to be displayed again within the display region of the selected counterpart.

Like the examples shown in FIG. 7A and FIG. 7B, by adjusting a size of a display region of a selected counterpart, a size of information displayed through the display region of the selected counterpart can be changed.

According to the description with reference to FIG. 7A and FIG. 7B, the size of the display region of the selected counterpart is adjusted by dragging the indicator 710 displayed within the display region of the selected counterpart. Yet, the size of the display region of the selected counterpart can be adjusted through another user input different from that shown in FIG. 7. For instance, the controller 180 can adjust a size of a display region of a selected counterpart in response to such a predefined user input as a pinch-out input (i.e., an action of increasing a distance between two pointers), a pinch-in input (i.e., an action of decreasing a distance between two pointers), and the like.

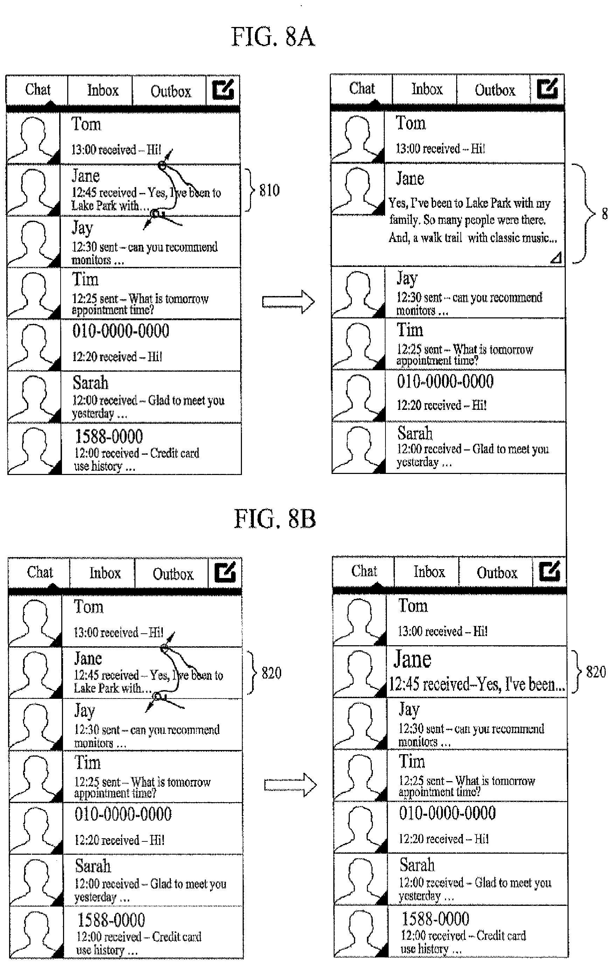

In doing so, the controller 180 can control a different operation to be activated in response to a pinch-in or pinch-out input depending on whether a specific counterpart is selected. This is described in detail with reference to FIG. 8A and FIG. 8B as follows.

FIG. 8A and FIG. 8B are diagrams to describe one example of activating a different function in response to a pinch-out or pinch-in input depending on whether a specific counterpart is selected.

Referring to FIG. 8A, while a specific counterpart is selected, if a pinch-out/in input is applied, the controller 180 can adjust a size of a display region 810 of the selected counterpart. Like the example shown in FIG. 8A, if the pinch-out input is applied, the controller 180 may be able to increase the size of the display region 810 of the selected counterpart. On the other hand, if the pinch-in input is applied, the controller 180 may be able to decrease the size of the display region 810 of the selected counterpart [not shown in the drawing].

Referring to FIG. 8B, while a specific counterpart is not selected, if a pinch-out/in input is applied, the controller 180 can adjust a font size. Like the example shown in FIG. 8B, if the pinch-out input is applied, the controller 180 may be able to increase the font size. On the other hand, if the pinch-in input is applied, the controller 180 may be able to decrease the font size [not shown in the drawing].

Although the controller 180 is able to adjust a font size for all counterparts in a message list in response to a pinch-in/out input, like the example shown in FIG. 8B, the controller 180 can adjust a font size of the display region 820 of the specific counterpart designated by the pinch-in/out input only. In particular, in response to a pinch-in/out input, the controller 180 can adjust a font size of the display region 820 of the specific counterpart corresponding to a start point (i.e., a point initially touched with a pointer to apply a pinch-in/out input) of the pinch-in/out input.

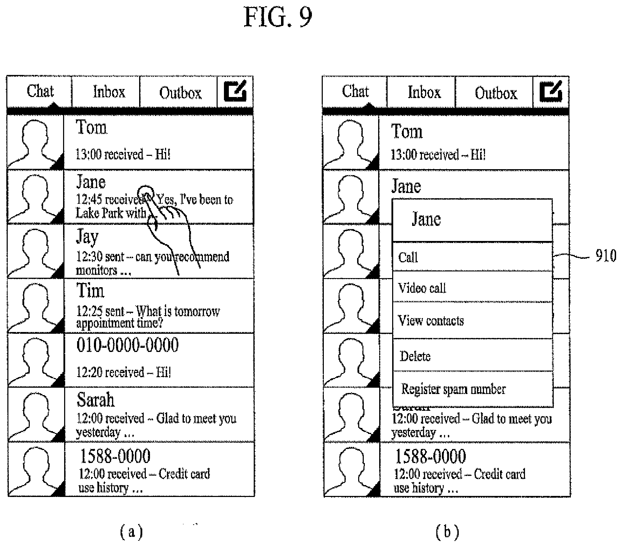

While a specific counterpart is selected, if a user input for a menu paging is applied to a display region of the selected counterpart, the controller 180 can control a popup menu to be displayed in response to the user input. For instance, FIG. 9 is a diagram for one example of displaying a popup menu. Referring to FIG. 9, if a user input (e.g., a long touch to an inside of a display region of a selected counterpart, etc.) for a menu paging is applied to an inside of a display region of a specific counterpart [FIG. 9 (a)], the controller 180 can control a popup menu 910 to be displayed [FIG. 9 (b)].

Through the popup menu, a user is able to make a phone call (corresponding to a 'call' region and a 'video call' region in the popup menu) to the selected counterpart or a detailed information (corresponding to a 'contact view' region in the popup menu) of the selected counterpart can be displayed. In this case, the detailed information of the counterpart can include an information of the counterpart registered at a phonebook.

Moreover, the user is able to delete the selected counterpart from the message list (corresponding to a 'delete' region in the popup menu) or can set a contact from the selected counterpart to be cut off in the future (corresponding to a 'spam number register' region in the popup menu).

Functions to be enabled through the popup menu 910 are changeable depending on a medium used to send or receive a message.

In the example shown in FIG. 9, a user input for a menu paging is an action of touching or long-touching an inside of a display region of a selected counterpart. According to the present invention, within a selected counterpart display region, the mobile terminal 100 can discriminate a case of long touching an image region inside from a case of long touching an image region outside. The mobile terminal 100 can recognize the former case as selecting a specific counterpart like the example shown in FIG. 6. And, the mobile terminal 100 can recognize the latter case as paging a popup menu like the example shown in FIG. 9. Yet, a user input for selecting a specific counterpart or a user input for paging a popup menu is non-limited by the above description.

Referring now to FIG. 4, according to the present invention, while the specific counterpart is selected, if a scroll input is received [S403], the controller 180 can control a scroll function to apply to a display region corresponding to the selected counterpart only [S404]. In particular, in response to a scroll input, the controller 180 can control a message, which is displayed through the display region corresponding to the selected counterpart, to be scrolled or changed. This is described in detail with reference to the accompanying drawings as follows.

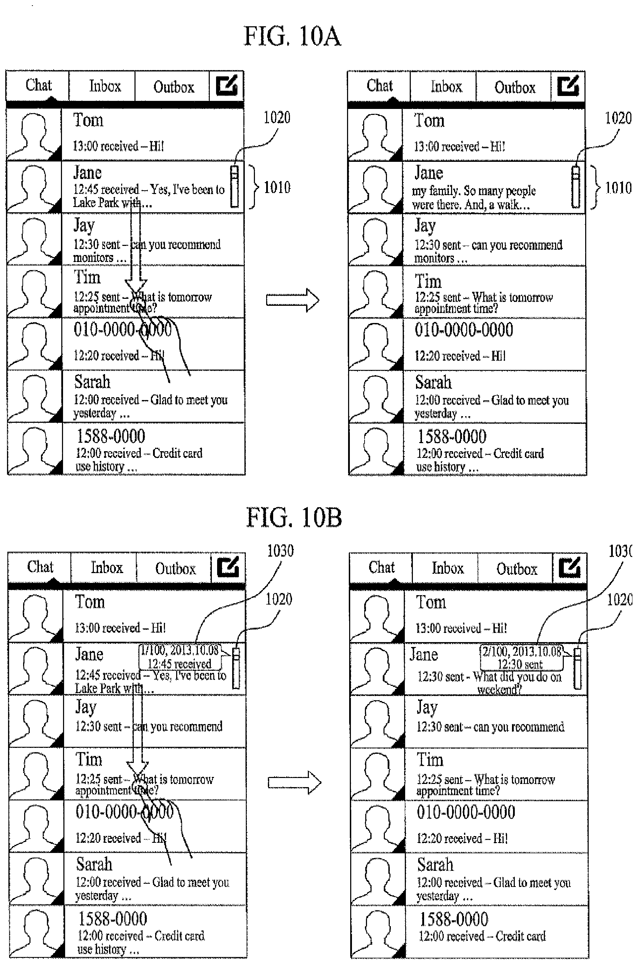

FIG. 10A and FIG. 10B are diagrams for one example of applying a scroll function only to a display region corresponding to a selected counterpart. For clarity of the following description, assume that a scroll input includes a drag input.

Referring to FIG. 10A, while a specific counterpart is selected from a message list, if a drag input is applied, the controller 180 can control a scroll function to be applied to a display region 1010 corresponding to the selected counterpart. In particular, since a message is too long, if it is unable to display all content within the display region, the controller 180 can control a content, which was not displayed on the display region of the selected counterpart, to be newly displayed in response to the scroll input.

For another instance, referring to FIG. 10B, in response to a scroll input, the controller 180 can change a message currently displayed on the display region 1010 into another message. In particular, when the controller sorts messages sent to or received from the selected counterpart in order of time, the controller 180 can control a message, which is next or previous to the message currently displayed on the display region 1010, to be displayed. Alternatively, the controller 180 can control a message, which was sent or received on a date different from that of the message currently displayed on the display region 1010, to be displayed. In the example shown in FIG. 10B, a message displayed through a display region of Jane is changed into a message sent at 12:30 from a message received at 12: 45.

For instance, like the examples shown in FIG. 10A and FIG. 10B, if a scroll input is received in a first direction, the controller 180 can control a message (i.e., a message sent or received right previous to a message displayed on the display region 1010), which is next to a message displayed on the display region 1010, to be displayed. For another instance (not shown in the drawings), if a scroll input is received in a second direction, the controller 180 can control a message (i.e., a message sent or received right next to a message displayed on the display region 1010), which is previous to a message displayed on the display region 1010, to be displayed. In this case, the second direction may be opposite to the first direction, by which the second direction is non-limited.

In order to indicate that a scroll input is applied to a display region of a selected counterpart only, like the examples shown in FIG. 10A and FIG. 10B, a scroll bar 1020 can be displayed within the display region 1010 of the selected counterpart. Through the scroll bar 1020, a user can recognize a location (or order) of a message currently displayed through the display region among all messages sent to or received from the selected counterpart.

The scroll bar 1020 can be displayed within a display region of a counterpart after selection of a specific counterpart. Alternatively, the scroll bar 1020 can be displayed within a display region of a counterpart selected after applying a scroll input. Moreover, if a user input (e.g., a scroll input) is not received for prescribed duration, the scroll bar 1020 may stop being displayed. When a scroll bar is displayed or stops being displayed on a display region of a selected counterpart, it is able to apply such a graphic effect as fade-in, fade-out, and the like.

Moreover, an information 1030 of the message currently displayed on the display region of the selected counterpart can be displayed around the scroll bar 1020. In this case, the message information 1030 can include a sent or received time of the message, an order of the message in sorting messages sent to or received from the selected counterpart by time, and the like. For instance, in the example of displaying the message information 1030 shown in FIG. 10B, '1/100' may indicate that a first one of total 100 messages with Jane is currently displayed through a display region of Jane and '2/100' may indicate that a second one of total 100 messages with Jane is currently displayed through a display region of Jane.

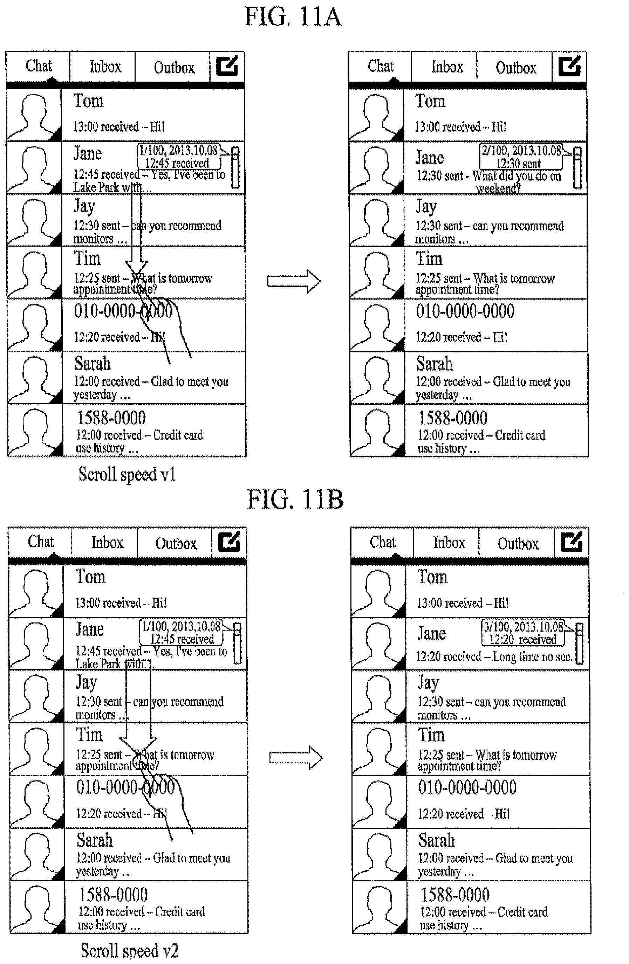

Like the example shown in FIG. 10B, when a message currently displayed through a display region is changed, the controller 180 can determine a change unit of the message currently displayed through the display region in consideration of a scroll speed. This is described in detail with reference to FIG. 11A and FIG. 11B as follows.

FIG. 11A and FIG. 11B are diagrams to describe one example of changing a message change unit in accordance with a scroll speed. For clarity of the following description, in the drawings of FIG. 11A and FIG. 11B, a sequence number of each message in accordance with time order shall be displayed nearby a scroll bar. Hence, it can be understood that a message #1 means a message most recently sent or received by the mobile terminal 100. And, it can be also understood that a message #2 is a message sent or received right before the message #1.

In order to input a scroll command, it is able to determine a scroll speed based on a speed of a pointer that is moving on the touchscreen. In particular, the scroll speed may increase in proportion to a speed of the pointer that is moving on the touchscreen.

The controller 180 can adjust a change unit of a message in proportion to a scroll speed. In particular, the controller 180 can change a message displayed on a display region by single or plural units. For instance, if a scroll speed is relatively low, like the example shown in FIG. 11A (e.g., a scroll speed is v1 in FIG. 11A), the controller 180 can control the message to be changed by single unit (e.g., the message #1 is changed into the message #2 in FIG. 11A). For another instance, if a scroll speed is relatively high, like the example shown in FIG. 11B (e.g., a scroll speed is v2 greater than v1 in FIG. 11B), the controller 180 can control the message to be changed by plural units (e.g., the message #1 is changed into the message #3 in FIG. 11B). In particular, like the examples shown in FIG. 11A and FIG. 11B, the controller 180 can control a message change unit to increase in proportion to a scroll speed.

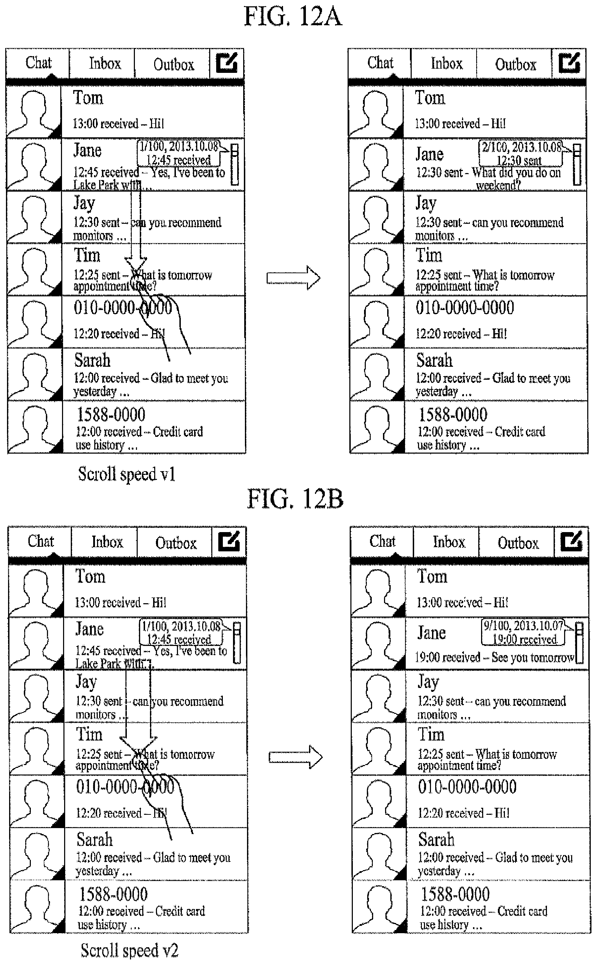

According to another embodiment, the mobile terminal 100 according to the present invention can determine a change reference of a message currently displayed through a display region in consideration of a scroll speed. This is described in detail with reference to FIG. 12A and FIG. 12B as follows.

FIG. 12A and FIG. 12B are diagrams to describe one example of adjusting a message change reference in accordance with a scroll speed. For clarity of the following description, in the drawings of FIG. 12A and FIG. 12B, a sent or received time information of each message shall be displayed nearby a scroll bar.

The controller 180 can adjust a message change reference in accordance with a scroll speed. In particular, if the scroll speed is smaller than a preset limit, the controller 180 can change a message displayed on a display region with reference to a sent or received time of a message. If the scroll speed is greater than a preset limit, the controller 180 can change a message displayed on a display region with reference to a sent or received date of a message. For instance, if the scroll speed is relatively low, like the example shown in FIG. 12A, the controller can display a message sent or received right previous (or next) to a message displayed through a display region with reference to a time (e.g., in FIG. 12A, a message #1 is changed into a message #2 in a display region of Jane). For another instance, if the scroll speed is relatively high, like the example shown in FIG. 12B (e.g., the scroll speed is v2 greater than v1 in FIG. 12B), the controller can display a message sent or received on a date previous (or next) to that of a message displayed through a display region with reference to a date (e.g., in FIG. 12B, a message received on '2013. 10. 8' is changed into a message received on '2013. 10. 7' in a display region of Jane). In particular, like the examples shown in FIG. 12A and FIG. 12B, the controller 180 can control a message change reference to be changed in accordance with a scroll speed.

In the examples shown in FIGs. 7 to 12, a scroll input is applied in top-to-bottom direction (i.e., vertical direction) of the touchscreen. Although a scroll input is applied in right-to-left direction (i.e., horizontal direction) of the touchscreen, it is a matter of course that the embodiments described with reference to FIGs. 7 to 12 are applicable as they are. In case that a scroll input is applied in a horizontal direction, a scroll bar displayed through a display region of a selected user can be displayed long in the horizontal direction.

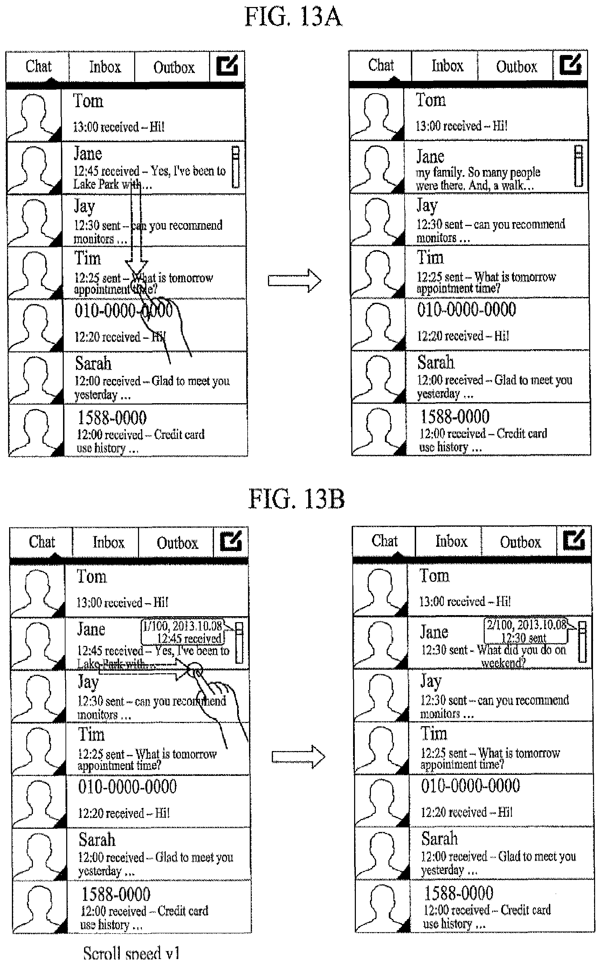

According to another embodiment of the present invention, the mobile terminal 100 according to the present invention can control a different operation to apply by discriminating a case of applying a scroll input in a horizontal direction from a case of applying a scroll input in a vertical direction. This is described in detail with reference to FIG. 13 as follows.

FIG. 13A is a diagram for one example of an operation in case of applying a scroll input in a vertical direction. And, FIG. 13B is a diagram for one example of an operation in case of applying a scroll input in a horizontal direction. In case that a scroll input is received in a vertical direction, like the example shown in FIG. 13A, in response to the scroll input, the controller 180 can display a non-displayed part of a message displayed through a display region (i.e., a message content failing to be displayed on the display region). On the other hand, in case that a scroll input is received in a horizontal direction, like the example shown in FIG. 13B, in response to the scroll input, the controller 180 can display a message next (or previous) to a message previously displayed through a display region.

In particular, by discriminating a case of receiving a scroll input in a vertical direction from a case of receiving a scroll input in a horizontal direction, if the scroll input of one of the two cases is applied, the controller 180 can control a non-outputted part of a message displayed through a display region to be displayed. If the scroll input of the other is applied, the controller 180 can control the message displayed through the display region to be changed.

For another example, by discriminating a case of receiving a scroll input in a vertical direction from a case of receiving a scroll input in a horizontal direction, the mobile terminal 100 according to the present invention can control a different change unit to apply. For instance, in case of receiving a scroll input in a vertical direction, the controller 180 can control a message to be changed by single unit. For another instance, in case of receiving a scroll input in a horizontal direction, the controller 180 can control a message to be changed by plural units.

For further example, by discriminating a case of receiving a scroll input in a vertical direction from a case of receiving a scroll input in a horizontal direction, the mobile terminal 100 according to the present invention can control a different change reference to apply. For instance, in case of receiving a scroll input in a vertical direction, the controller 180 can control a message to be changed with reference to a message sent or received time. For another instance, in case of receiving a scroll input in a horizontal direction, the controller 180 can control a message to be changed with reference to a message sent or received date.

For another further example, by discriminating a case of receiving a scroll input in a vertical direction from a case of receiving a scroll input in a horizontal direction, the mobile terminal 100 according to the present invention can determine whether to apply a scroll function to a selected counterpart only. For instance, in case of receiving a scroll input in a vertical direction, the controller 180 can control a scroll function to apply to a whole message list. For another instance, in case of receiving a scroll input in a horizontal direction, the controller 180 can control a scroll function to apply to a display region of a selected counterpart only.

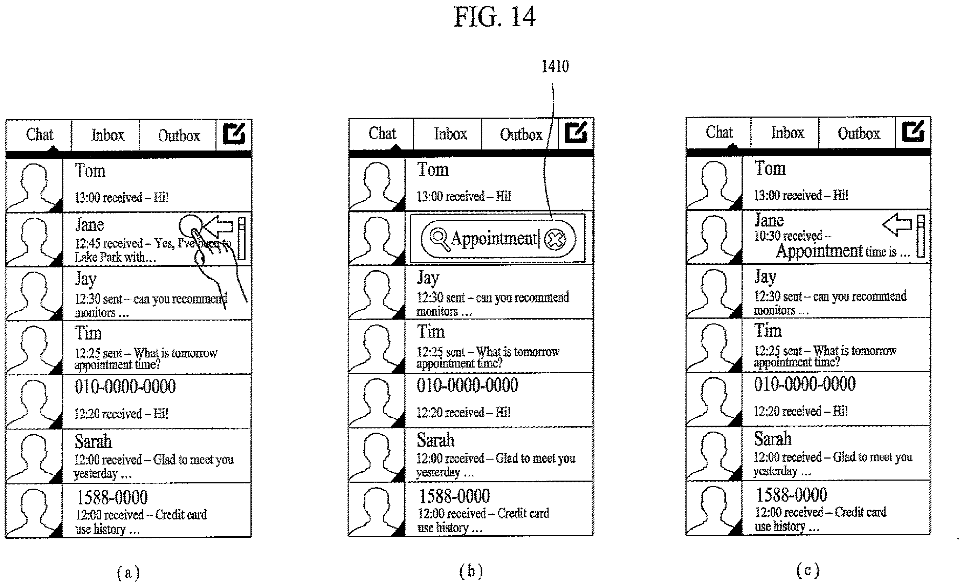

If a prescribed user input is applied to an inside of a display region of a selected counterpart, the controller 180 can control a search window, which is provided to search messages sent to or received from the selected counterpart for a message containing a specific keyword, to be displayed. This is described in detail with reference to FIG. 14 as follows.

FIG. 14 is a diagram to describe one example of displaying a search window for searching messages transmitted to or received from a selected counterpart for a message containing a specific keyword. For clarity of the following description, assume that a user input for displaying a search window is an action of dragging a scroll bar displayed within a display region of a selected counterpart in a prescribed direction.

Referring to FIG. 14, if a user input of dragging a scroll bar displayed within a display region of a selected counterpart in a prescribed direction is received [FIG. 14 (a)], the controller 180 can control a search window 1410 to be displayed [FIG. 14 (b)]. If a prescribed keyword is inputted through the search window 1410, like the example shown in FIG. 14 (c), the controller 180 extracts a message containing the inputted keyword from messages sent to or received from the selected counterpart and is then able to control the extracted message to be displayed through the display region of the selected counterpart. In case that there are a plurality of messages containing the inputted keyword, the controller 180 can control a scroll function to apply to a plurality of extracted messages in response to a user's scroll input.

Thereafter, if a preset user input is received or a cancel key for cancelling a most recently executed command is pushed, the controller 180 can control a scroll function to apply to all messages with a re-selected counterpart. In this case, the preset user input may include an action of touching or long-touching a prescribed region (e.g., an image region) within a display region of a selected counterpart, by which the preset user input is non-limited.

The mobile terminal 100 according to the present invention can send or receive messages using various communication media including a text message, an instant message, and email and the like. When the mobile terminal 100 sends or receives messages through various media from a specific counterpart, it is necessary to run an application appropriate for each medium in order to check each of the messages. For instance, in order to check a text message, it is necessary to run a message application. In order to check an instant message, it is necessary to run a messenger application. In order to check an email, it is necessary to run an email application. Thus, if messages are sent or received through several media, it is inconvenient for a user to run different applications in order to check the messages through the corresponding media one by one.

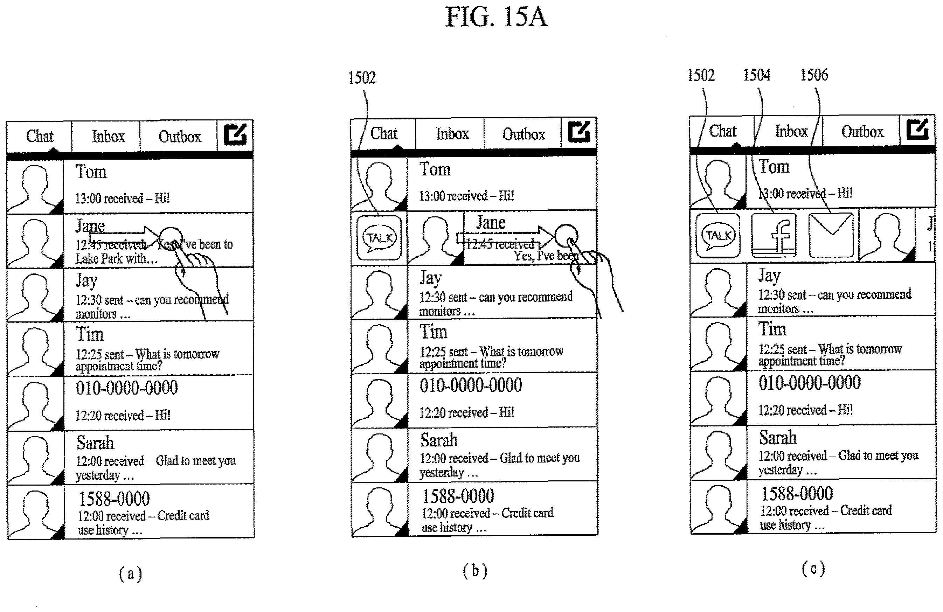

In order to settle the above-mentioned inconvenience and to facilitate a message check through a medium in the course of checking a message for a specific medium, the mobile terminal 100 according to the present invention can display the message through the different medium on a message list for the specific medium. This is described in detail with reference to FIGs. 15A to 15C as follows.

FIGs. 15A to 15C are diagrams to describe examples of displaying a message by a different medium on a message list for a specific medium.

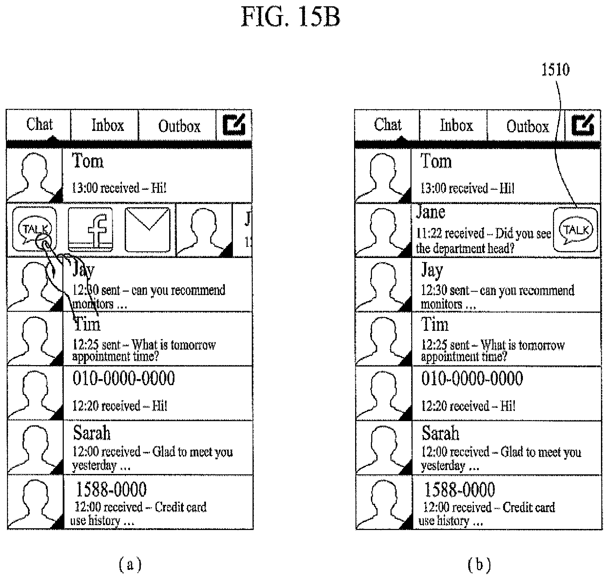

In a message list on which sent or received messages for a specific medium are displayed, if a predefined user input for a specific counterpart is received, the controller 180 can control an icon, which represents each medium, to be displayed in order to check a message sent or received through a different medium. For instance, like the example shown in FIG. 15(a), if a pointer moves in a first direction within a display region of a specific counterpart (i.e., a drag or flicking input is received in the first direction), like the example shown in FIG. 15(b), the controller 180 can control icons 1502, 1504 and 1506 representing media to be displayed in order to check a message transmitted to or received from a counterpart selected by the pointer via the different medium. For clarity of the description, in the following drawing, assume that an icon denoted by a reference number 1502 indicates an instant messaging service, an icon denoted by a reference number 1504 indicates an SNS, and an icon denoted by a reference number 1506 indicates an email service.

For instance, in response to a user input, the controller 180 can control an information, which is displayed through a display region of a previously selected counterpart, to disappear in a moving direction (i.e., a first direction) of a pointer and can also control an icon representing each medium to be displayed on a side opposite to the information disappearing side. Like the example shown in FIGs. 15A(a) to 15A (c), the controller 180 can control more icons to be displayed if the moving distance of the pointer in the first direction gets longer.

In doing so, the controller 180 can sort the icons by the number of messages with a selected counterpart per medium and a time order of communications with the selected counterpart per medium. In particular, an icon of the medium having the great number of messages with a counterpart or an icon of the medium used to communicate with a counterpart most recently can be displayed in the first place.

If a user input to an icon is received, like the example shown in FIG. 15B(a) and FIG. 15B (b), the controller 180 can control a message, which is sent to or received from a counterpart via a medium corresponding to the selected icon, to be displayed through a display region of a selected counterpart. Hence, a user can conveniently check a message sent or received via a different medium without running a separate application.

In displaying the message sent or received via the different medium, like the example shown in FIG. 15B(b), the controller 180 can control a medium information 1510 of the message, which is displayed on the display region of the selected counterpart, to be displayed (e.g., the medium information is displayed as an icon in FIG. 15B(b)). If the medium information 1510 displayed through the display region of the selected counterpart or a message displayed through the display region of the selected counterpart is long touched, the controller 180 can run an application for checking the message through the corresponding medium. Hence, a user can conveniently run the application for checking a message for a different medium from a message list for a specific medium.

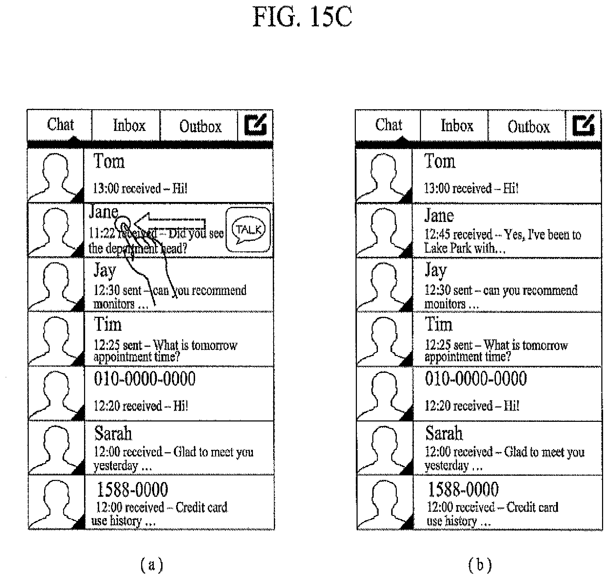

While the message via the different medium is displayed through the display region of the selected counterpart, if the pointer moves in a second direction (i.e., a frag or flicking input is received in the second direction) or a cancel key for cancelling a most recently executed command is pushed, like the example shown in FIG. 15C(a) and FIG. 15C(b), the controller 180 can control the message, which was sent or received via the specific medium, to be displayed again, as it was, in response to the user input.

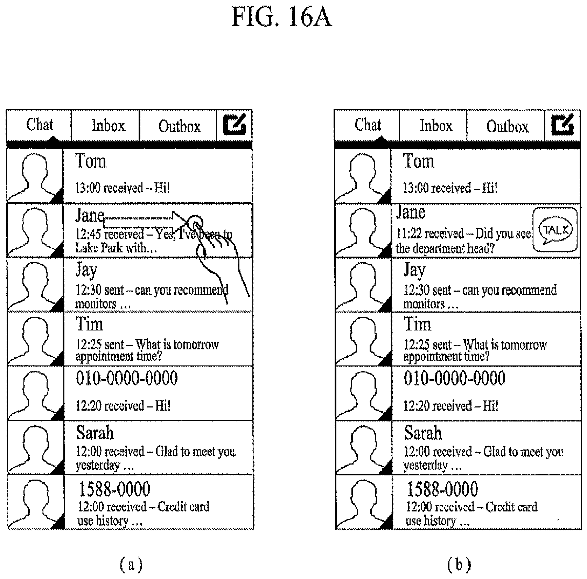

The mobile terminal 100 according to the present invention can determine whether to display a message via a specific medium in consideration of a moving direction of a pointer. This is described in detail with reference to FIGs. 16A to 16C as follows.

FIGs. 16A to 16C are diagrams for examples of determining a medium to display on a message list in consideration of a moving direction of a pointer.

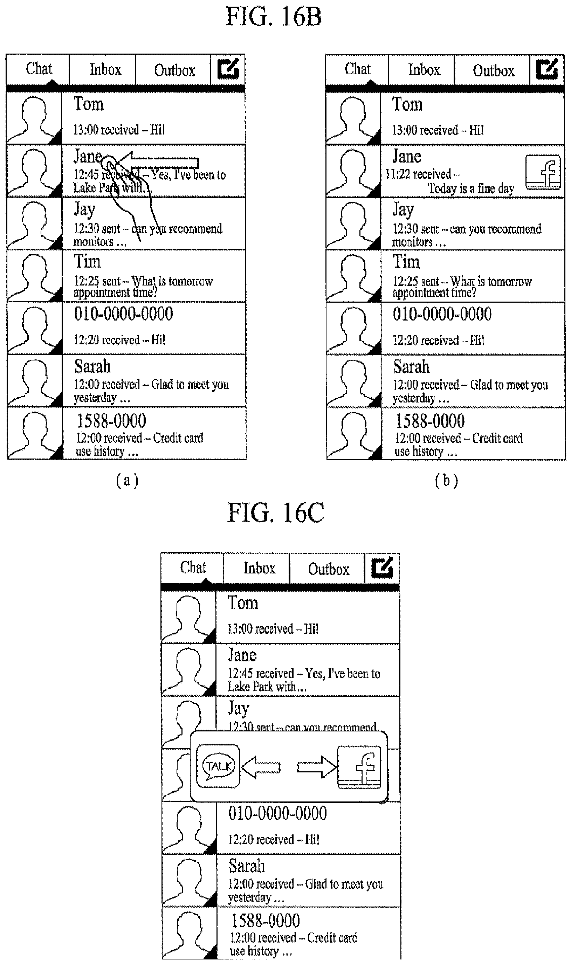

For clarity of the following description, assume that a message list is related to a first medium (e.g., a text messaging service in FIG. 16A (a) and FIG. 16B (a)).

While a specific counterpart is selected, if a pointer is moved in a first direction by a drag, the controller 180 can control a message by a second medium (e.g., an instant messaging service in FIG. 16A (b)) to be displayed on a display region of a selected counterpart in response to a user input.

On the other hand, if the pointer is moved in a second direction by a drag, the controller 180 can control a message by a third medium (e.g., an SNS in FIG. 16B (b)) to be displayed on a display region of a selected counterpart in response to a user input.

In order to enable a user to recognize a medium corresponding to a moving direction of a pointer, like the example shown in FIG. 16C, the controller 180 can control an arrow indicating the pointer moving direction and an information of a corresponding medium to be displayed. For instance, an instant messaging service is matched to a right arrow and an SNS is matched to a left arrow. Hence, if a pointer is dragged in a right direction, a user can expect that a message by the instant messaging service will be displayed. If the pointer is dragged in a left direction, the user can expect that a message by the SNS will be displayed.

For clarity, FIGs. 16A to 16C show the examples that the pointer moves in right or left direction only, by which the present invention is non-limited. In particular, medium information can be matched to more direction in consideration of the number of media related to a selected counterpart.

Accordingly, embodiments of the present invention provide various effects and/or features.

First of all, the present invention provides a mobile terminal and controlling method thereof, by which user's convenience can be enhanced.
In particular, the present invention provides a mobile terminal and controlling method thereof, by which a message with a specific counterpart can be checked on a message list.

Moreover, the present invention provides a mobile terminal and controlling method thereof, by which a message by a different medium can be displayed on a message list related to a specific medium.

The above-described methods can be implemented in a program recorded medium as processor-readable codes. The processor-readable media may include all kinds of recording devices in which data readable by a processor are stored. The processor-readable media may include ROM, RAM, CD-ROM, magnetic tapes, floppy discs, optical data storage devices, and the like for example and also include carrier-wave type implementations (e.g., transmission via Internet).

It will be appreciated by those skilled in the art that various modifications and variations can be made in the present invention. Thus, it is intended that the present invention covers the modifications and variations of this invention provided they come within the scope of the appended claims.

## Claims

1. A mobile terminal (100) comprising:
a wireless communication unit (110) configured to send or receive a message;
a memory (160) configured to store the message;
a display unit (151) being a touch screen display configured to display a message list, the displayed message list including a plurality of display regions, each display region corresponding to one counterpart and including an identification information on the corresponding counterpart and at least one portion of a message transmitted to or received from the corresponding counterpart;
and a controller (180);
**characterized in that** the controller (180) is configured to:
in response to receiving a first scroll input in a first direction, to display a non-displayed part of the message currently displayed within the display region (1010) of a specific counterpart, which is selected from the message list, said non-displayed part of the message being displayed within the display region (1010) corresponding to the selected counterpart ; and
in response to receiving a second scroll input in a second direction perpendicular to the first direction, to change, on the display region (1010) corresponding to the selected counterpart, the message currently displayed within the display region (1010) into another message of the selected counterpart.

2. The mobile terminal (100) of claim 1, wherein the controller (180) is provided to control the message to be changed sequentially based on a sent time or a received time of each message sent or received from the selected counterpart.

3. The mobile terminal (100) of claim 1 or 2, wherein the controller (180) is provided to adjust the change speed of messages displayed on the display region by message units based on a speed of the second scroll input.

4. The mobile terminal (100) of claim 3, wherein the controller (180) is provided to control a number of the message change units to increase in proportion to the speed of the second scroll input.

5. The mobile terminal (100) of any proceeding claims, wherein the controller (180) is provided to adjust a change order reference of the message according to which the messages are changed sequentially based on a speed of the second scroll input.

6. The mobile terminal (100) of claim 5, wherein when the speed of the second scroll input is within a first prescribed range, the controller (180) is provided to control the message to be changed sequentially in order of a sent time or a received time of each message sent or received from the selected counterpart, and
wherein when the speed of the second scroll input is within a second prescribed range, the controller (180) is provided to control the message to be changed sequentially in order of a sent date or a received date of each message sent or received from the selected counterpart.

7. The mobile terminal (100) of any proceeding claims, wherein the controller (180) is provided to control the display unit (151) to display a popup window for completely displaying the message.

8. The mobile terminal (100) of any proceeding claims, wherein when an image file is attached to the message displayed on the message list, the controller (180) is provided to control the display unit (151) to display a popup window for displaying the attached image.

9. The mobile terminal (100) of any proceeding claims, wherein the controller (180) is provided to control the display unit (151) to distinguishably display the selected counterpart from other counterparts on the displayed message list.

10. The mobile terminal (100) of one of claims 1 to 9, wherein one of the first scroll input and the second scroll input is received by moving a pointer in a right-to-left direction of the touchscreen, and wherein the other one of the first scroll input and the second scroll input is received by moving the pointer in a top-to-bottom direction of the touchscreen.

11. A method of controlling a mobile terminal (100), comprising:
displaying a message list on a touch screen display that includes a plurality of display regions, each display region corresponding to one counterpart and including an identification information on the corresponding counterpart and at least one portion of a message transmitted to or received from the corresponding counterpart;
selecting at least one counterpart from the displayed message list; and
in response to receiving a first scroll input in a first direction, display on the display region (1010) corresponding to the selected counterpart, a non-displayed part of the message currently displayed within the display region (1010) corresponding to the selected counterpart, and in response to receiving a second scroll input in a second direction perpendicular to the first direction, change on the display region (1010) corresponding to the selected counterpart the message currently displayed within the display region (1010) into another message of the selected counterpart.

## Patentansprüche

1. Mobiles Endgerät (100), das Folgendes umfasst:
eine drahtlose Kommunikationseinheit (110), die konfiguriert ist, eine Nachricht zu senden oder zu empfangen;
einen Speicher (160), der konfiguriert ist, die Nachricht zu speichern;
eine Anzeigeeinheit (151), die eine Berührungsbildschirmanzeigeeinheit ist, die konfiguriert ist, eine Nachrichtenliste anzuzeigen, wobei die angezeigte Nachrichtenliste mehrere Anzeigebereiche enthält, wobei jeder Anzeigebereich einem Gegenüber entspricht und Identifizierungsinformationen über das entsprechende Gegenüber und mindestens einen Teil einer Nachricht, die zu dem entsprechenden Gegenüber gesendet oder von ihm empfangen wurde, enthält; und
eine Steuereinheit (180);
**dadurch gekennzeichnet, dass** die Steuereinheit (180) konfiguriert ist zum
Anzeigen als Antwort auf das Empfangen einer ersten Bildlaufeingabe in einer ersten Richtung eines nicht angezeigten Teils der Nachricht, die gegenwärtig in dem Anzeigebereich (1010) eines bestimmten Gegenübers, das aus der Nachrichtenlisten ausgewählt wird, angezeigt wird, wobei der nicht angezeigte Teil der Nachricht in dem Anzeigebereich (1010), der dem ausgewählten Gegenüber entspricht, angezeigt wird; und
Ändern in dem Anzeigebereich (1010), der dem zweiten Gegenüber entspricht, als Antwort auf das Empfangen einer zweiten Bildlaufeingabe in einer zweiten Richtung senkrecht zu der ersten Richtung, der Nachricht, die gegenwärtig in dem Anzeigebereich (1010) angezeigt wird, in eine weitere Nachricht des ausgewählten Gegenübers.

2. Mobiles Endgerät (100) nach Anspruch 1, wobei die Steuereinheit (180) vorgesehen ist, um die zu ändernde Nachricht sequentiell auf der Grundlage einer Sendezeit oder einer Empfangszeit jeder von dem ausgewählten Gegenüber gesendeten oder empfangenen Nachricht zu steuern.

3. Mobiles Endgerät (100) nach Anspruch 1 oder 2, wobei die Steuereinheit (180) vorgesehen ist, um die Änderungsgeschwindigkeit von Nachrichten, die in dem Anzeigebereich angezeigt werden, in Nachrichteneinheiten auf der Grundlage einer Geschwindigkeit der zweiten Bildlaufeingabe anzupassen.

4. Mobiles Endgerät (100) nach Anspruch 3, wobei die Steuereinheit (180) vorgesehen ist, eine Anzahl der Nachrichtenänderungseinheiten derart zu steuern, dass sie sich im Verhältnis zu der Geschwindigkeit der zweiten Bildlaufeingabe erhöht.

5. Mobiles Endgerät (100) nach einem der vorhergehenden Ansprüche, wobei die Steuereinheit (180) vorgesehen ist, eine Änderungsreihenfolgenreferenz der Nachricht, gemäß der die Nachrichten sequentiell geändert werden, auf der Grundlage einer Geschwindigkeit der zweiten Bildlaufangabe anzupassen.

6. Mobiles Endgerät (100) nach Anspruch 5, wobei dann, wenn die Geschwindigkeit der zweiten Bildlaufeingabe in einem ersten vorgegebenen Bereich liegt, die Steuereinheit (180) vorgesehen ist, die zu ändernde Nachricht sequentiell in der Reihenfolge einer Sendezeit oder einer Empfangszeit jeder von dem ausgewählten Gegenüber gesendeten oder empfangenen Nachricht zu steuern, und
dann, wenn die Geschwindigkeit der zweiten Bildlaufeingabe in einem zweiten vorgegebenen Bereich liegt, die Steuereinheit (180) vorgesehen ist, die zu ändernde Nachricht sequentiell in der Reihenfolge eines Sendedatums oder eines Empfangsdatums jeder von dem ausgewählten Gegenüber gesendeten oder empfangenen Nachricht zu steuern.

7. Mobiles Endgerät (100) nach einem der vorhergehenden Ansprüche, wobei die Steuereinheit (180) vorgesehen ist, die Anzeigeeinheit (151) zu steuern, ein Popup-Fenster zum vollständigen Anzeigen der Nachricht anzuzeigen.

8. Mobiles Endgerät (100) nach einem der vorhergehenden Ansprüche, wobei dann, wenn an die in der Nachrichtenliste angezeigte Nachricht eine Bilddatei angehängt ist, die Steuereinheit (180) vorgesehen ist, die Anzeigeeinheit (151) zu steuern, ein Popup-Fenster zum Anzeigen des angehängten Bildes anzuzeigen.

9. Mobiles Endgerät (100) nach einem der vorhergehenden Ansprüche, wobei die Steuereinheit (180) vorgesehen ist, die Anzeigeeinheit (151) zu steuern, das ausgewählte Gegenüber von weiteren Gegenübern in der Nachrichtenliste unterscheidbar anzuzeigen.

10. Mobiles Endgerät (100) nach einem der Ansprüche 1 bis 9, wobei die erste Bildlaufeingabe oder die zweite Bildlaufeingabe durch Bewegen eines Zeigers in einer Rechts-/Linksrichtung des Berührungsbildschirms empfangen wird und die andere der ersten Bildlaufeingabe und der zweiten Bildlaufeingabe durch Bewegen des Zeigers in einer Oben-/Untenrichtung auf dem Berührungsbildschirm empfangen wird.

11. Verfahren zum Steuern eines mobilen Endgeräts (100), das Folgendes umfasst:
Anzeigen einer Nachrichtenliste auf einem Berührungsbildschirm, der mehrere Anzeigebereiche enthält, wobei jeder Anzeigebereich einem Gegenüber entspricht und Identifizierungsinformationen über das entsprechende Gegenüber und mindestens einen Teil einer Nachricht, die zu dem entsprechenden Gegenüber gesendet oder von ihm empfangen wurde, enthält;
Auswählen mindestens eines Gegenübers von der angezeigten Nachrichtenliste; und
als Antwort auf das Empfangen einer ersten Bildlaufeingabe in einer ersten Richtung Anzeigen eines nicht angezeigten Teils der Nachricht, die gegenwärtig in dem Anzeigebereich (1010), der dem bestimmten Gegenüber entspricht, angezeigt wird, auf dem Anzeigebereich (1010), der dem ausgewählten Gegenüber entspricht, und
als Antwort auf das Empfangen einer zweiten Bildlaufeingabe in einer zweiten Richtung senkrecht zu der ersten Richtung Ändern der Nachricht, die gegenwärtig in dem Anzeigebereich (1010) angezeigt wird, in eine weitere Nachricht des ausgewählten Gegenübers auf dem Anzeigebereich (1010), der dem ausgewählten Gegenüber entspricht.

## Revendications

1. Terminal mobile (100) comprenant :
une unité de communication sans fil (110) configurée pour envoyer ou recevoir un message ;
une mémoire (160) configurée pour mémoriser le message ;
une unité d'affichage (151) étant un affichage d'écran tactile configuré pour afficher une liste de messages, la liste de messages affichée comprenant une pluralité de régions d'affichage, chaque région d'affichage correspondant à un interlocuteur et comprenant une information d'identification de l'interlocuteur correspondant et au moins une portion d'un message transmis à destination de l'interlocuteur correspondant ou reçu en provenance de celui-ci ;
et un organe de commande (180) ;
**caractérisé en ce que** l'organe de commande (180) est configuré pour :
en réponse à la réception d'une première entrée de défilement dans un premier sens, afficher une partie non affichée du message actuellement affiché à l'intérieur de la région d'affichage (1010) d'un interlocuteur spécifique, qui est sélectionné dans la liste de messages, ladite partie non affichée du message étant affichée à l'intérieur de la région d'affichage (1010) correspondant à l'interlocuteur sélectionné ; et
en réponse à la réception d'une deuxième entrée de défilement dans un deuxième sens perpendiculaire au premier sens, changer, sur la région d'affichage (1010) correspondant à l'interlocuteur sélectionné, le message actuellement affiché à l'intérieur de la région d'affichage (1010) par un autre message de l'interlocuteur sélectionné.

2. Terminal mobile (100) selon la revendication 1, dans lequel l'organe de commande (180) est prévu pour commander au message de changer séquentiellement sur la base d'un temps d'envoi ou d'un temps de réception de chaque message envoyé à l'interlocuteur sélectionné ou reçu en provenance de celui-ci.

3. Terminal mobile (100) selon la revendication 1 ou 2, dans lequel l'organe de commande (180) est prévu pour ajuster la vitesse de changement de messages affichés sur la région d'affichage par des unités de message sur la base d'une vitesse de la deuxième entrée de défilement.

4. Terminal mobile (100) selon la revendication 3, dans lequel l'organe de commande (180) est prévu pour commander à un nombre des unités de changement de message d'augmenter en proportion de la vitesse de la deuxième entrée de défilement.

5. Terminal mobile (100) selon l'une quelconque des revendications précédentes, dans lequel l'organe de commande (180) est prévu pour ajuster une référence d'ordre de changement du message en fonction de laquelle les messages sont changés séquentiellement sur la base d'une vitesse de la deuxième entrée de défilement.

6. Terminal mobile (100) selon la revendication 5, dans lequel, lorsque la vitesse de la deuxième entrée de défilement est à l'intérieur d'une première plage prescrite, l'organe de commande (180) est prévu pour commander au message d'être changé séquentiellement dans un ordre d'un temps d'envoi ou d'un temps de réception de chaque message envoyé à l'interlocuteur sélectionné ou reçu en provenance de celui-ci, et dans lequel, lorsque la vitesse de la deuxième entrée de défilement est à l'intérieur d'une deuxième plage prescrite, l'organe de commande (180) est prévu pour commander au message de changer séquentiellement dans un ordre d'une date d'envoi ou d'une date de réception de chaque message envoyé à l'interlocuteur sélectionné ou reçu en provenance de celui-ci.

7. Terminal mobile (100) selon l'une quelconque des revendications précédentes, dans lequel l'organe de commande (180) est prévu pour commander à l'unité d'affichage (151) d'afficher une fenêtre contextuelle pour afficher complètement le message.

8. Terminal mobile (100) selon l'une quelconque des revendications précédentes, dans lequel, lorsqu'un fichier d'image est joint au message affiché sur la liste de messages, l'organe de commande (180) est prévu pour commander à l'unité d'affichage (151) d'afficher une fenêtre contextuelle pour afficher l'image jointe.

9. Terminal mobile (100) selon l'une quelconque des revendications précédentes, dans lequel l'organe de commande (180) est prévu pour commander à l'unité d'affichage (151) d'afficher l'interlocuteur sélectionné de manière distinctive des autres interlocuteurs sur la liste de messages affichée.

10. Terminal mobile (100) selon l'une quelconque des revendications 1 à 9, dans lequel l'une de la première entrée de défilement et de la deuxième entrée de défilement est reçue en déplaçant un pointeur dans un sens de droite à gauche de l'écran tactile, et dans lequel l'autre de la première entrée de défilement et de la deuxième entrée de défilement est reçue en déplaçant le pointeur dans un sens de haut en bas de l'écran tactile.

11. Procédé de commande d'un terminal mobile (100), comprenant :
l'affichage d'une liste de messages sur un affichage d'écran tactile qui comprend une pluralité de régions d'affichage, chaque région d'affichage correspondant à un interlocuteur et comprenant une information d'identification de l'interlocuteur correspondant et au moins une portion d'un message transmis à destination de l'interlocuteur correspondant ou reçu en provenance de celui-ci ;
la sélection d'au moins un interlocuteur dans la liste de messages affichée ; et
en réponse à la réception d'une première entrée de défilement dans un premier sens, l'affichage, sur la région d'affichage (1010) correspondant à l'interlocuteur sélectionné, d'une partie non affichée du message actuellement affiché à l'intérieur de la région d'affichage (1010) correspondant à l'interlocuteur sélectionné, et, en réponse à la réception d'une deuxième entrée de défilement dans un deuxième sens perpendiculaire au premier sens, le changement, sur la région d'affichage (1010) correspondant à l'interlocuteur sélectionné, du message actuellement affiché à l'intérieur de la région d'affichage (1010) dans un autre message de l'interlocuteur sélectionné.
